# EUROPÄISCHE PATENTANMELDUNG

(11) **EP 1 426 573 A1**
(43) Veröffentlichungstag der Anmeldung: **09.06.2004**
(21) Anmeldenummer: 03015482.7
(22) Anmeldetag: 09.07.2003
(51) Int. Cl.: F01N 7/14, B60H 1/22

(54) **Abgasführungssystem für ein Fahrzeugheizsystem**

(30) Priorität: 02.12.2002 DE 20218647 U
(71) Anmelder: J. Eberspächer GmbH & Co. KG, 73730 Esslingen (DE)
(72) Erfinder: Dreiocker, René, 73779 Deizisau (DE); Herrmann, Jesko, 72660 Beuren (DE)
(74) Vertreter: Ruttensperger, Bernhard, Dipl.-Phys.

(57) **Zusammenfassung**

Ein Abgasführungssystem (22) für ein Fahrzeugheisystem (10) umfasst ein Abgasführungsrohr (24), das mit einem Abgasauslass eines Heizgerätes (12) verbindbar ist, sowie wenigstens ein Wärmeabschirmungselement (30) für das Abgasführungsrohr (24), welches das Abgasfürungsrohr (24) wenigstens bereichweise und unter Bereitstellung eines Zwischenraums umgibt.

## Beschreibung

Die vorliegende Erfindung betrifft ein Abgasführungssystem für ein Fahrzeugheizsystem.

Bei der Integration von Brennstoff betriebenen Fahrzeugheizgeräten in Fahrzeuge besteht im Allgemeinen das Problem, dass der zur Verfügung stehende Bauraum sehr begrenzt ist. Dies erfordert einerseits einen sehr kompakten Aufbau der bei Fahrzeugheizsystemen vorgesehenen Heizgeräte. Andererseits muß darauf geachtet werden, dass keine ungewünschten Wechselwirkungen zwischen dem Heizsystem und anderen Fahrzeugkomponenten auftreten.

Es ist die Aufgabe der vorliegenden Erfindung, ein Abgasführungssystem für ein Fahrzeugheizsystem vorzusehen, welches eine thermische Beeinträchtigung anderer Fahrzeugkomponenten vermeidet.

Erfindungsgemäß wird diese Aufgabe gelöst durch ein Abgasführungssystem für ein Fahrzeugheizsystem, umfassend ein Abgasführungsrohr, das mit einem Abgasauslass eines Heizgerätes verbindbar ist, sowie wenigstens ein Wärmeabschirmungselement für das Abgasführungsrohr, welches das Abgasfürungsrohr wenigstens bereichweise und unter Bereitstellung eines Zwischenraums umgibt.

Durch das Bereitstellen wenigstens eines nahe an, jedoch mit Abstand zu einem Abgasführungsrohrangeordneten Wärmeabschirmungselements wird bei Beibehalt einer kompakten Bauform für eine thermische Abschirmung insbesondere gegen Wärmeabstrahlung aber auch gegen Wärmekonfektion gesorgt.

Um den Abstand zwischen dem Abgasführungsrohr und dem wenigstens einen Wärmeabschirmungselement in einfacher Weise bereitstellen zu können, wird vorgeschlagen, dass das wenigstens eine Wärmeabschirmungselement eine Mehrzahl von an dem Abgasführungsrohr anliegenden Distanzabschnitten aufweist.

Dabei kann eine stabile Anlage dadurch erzeugt werden, dass das wenigstens eine Wärmeabschirmungselement an wenigstens einem seiner beiden in Abgasströmungsrichtung vorne und hinten gelegenen Endbereichen wenigstens einen Distanzabschnitt zur Anlage an dem Abgasführungsrohr aufweist.

In sehr kostengünstiger Art und Weise kann das wenigstens eine Wärmeabschirmungselement bereitgestellt werden, wenn es aus Blechmaterial geformt ist. Dabei kann weiter vorgesehen sein, dass das wenigstens eine Wärmeabschirmungselement in Anpassung an die Außenform des Abgasführungsrohrs geformt ist und dass wenigstens ein Distanzabschnitt an dem Wärmeabschirmungselement integral angeformt ist.

Ein fester Verbund zwischen dem wenigstens einen Wärmeabschirmungselement und dem Abgasführungsrohr kann dadurch erhalten werden, dass das wenigstens eine Wärmeabschirmungselement mit dem Abgasführungsrohr durch Verschweißung verbunden ist.

Die Erfindung betrifft ferner ein Fahrzeugheizsystem, umfassend ein Heizgerät und ein mit einem Abgasauslass das Heizgeräts verbundenes erfindungsgemäßes Abgasführungssystem.

Nachfolgend wird die vorliegende Erfindung mit Bezug auf die beiliegenden Figuren detailliert beschrieben. Es zeigt:
- Fig. 1: eine Ansicht eines Fahrzeugheizsystems;
- Fig. 2: eine perspektivische Ansicht eines Wärmeabschirmungselements;
- Fig. 3: eine Schnittansicht eine Abgasführungssystems, geschnitten längs einer Linie III - III in Fig. 4;
- Fig. 4: eine Teil-Seitenansicht eines Abgasführungssystems.

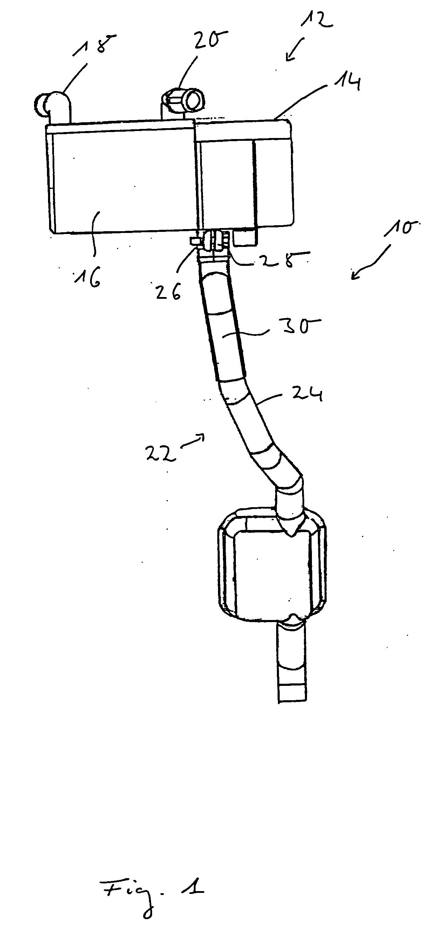

Die Fig. 1 zeigt ein Fahrzeugheizsystem 10, das als wesentlichen Bereich ein Heizgerät 12 mit einem Brennerbereich 14 und einem Wärmetauscherbereich 16 aufweist. In einer Brennkammer des Brennerbereichs 14 wird Verbrennungsluft mit verdampftem oder zerstäubtem Brennstoff gemischt und verbrannt. Die dabei entstehende Verbrennungswärme wird im Wärmetauscherbereich 16 auf ein zu erwärmendes Medium, z.B. Wasser, übertragen, das über Ein- bzw. Auslassstutzen 18, 20 durch den Wärmetauscherbereich 16 hindurchgeleitet wird.

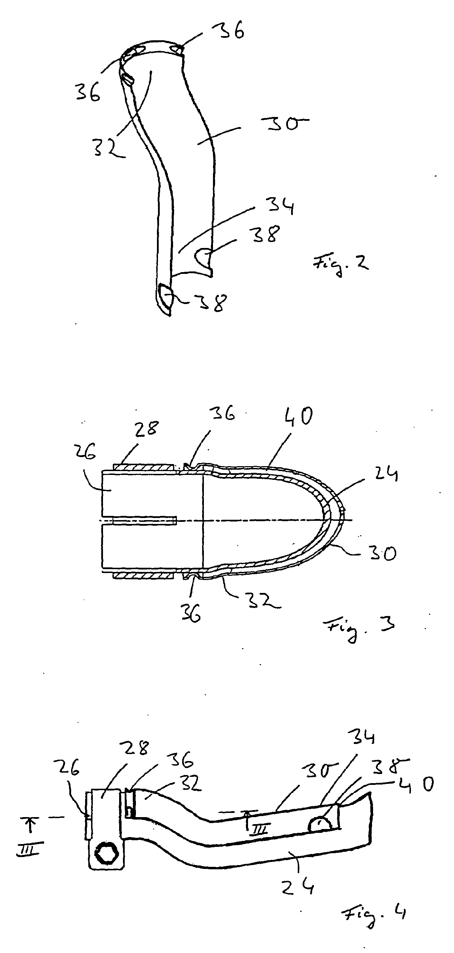

Ein Abgasführungssytem 22 umfasst ein Abgasführungsrohr 24, das mit einem Ende 26 auf einen Abgasauslassstutzen des Heizgeräts 12 aufgeschoben und durch eine Rohrschelle 28 oder dgl. daran festgelegt ist. Das im Allgemeinen aus Blechmaterial gefertigte Abgasführungsrohr 24 kann aus mehreren Rohrstücken zusammengesetzt sein und weist ggf. einen gekrümmten Verlauf auf, der eine Platz sparende Integration in ein Fahrzeug zuläßt. In Fig. 4 erkennt man, dass in dem dem Ende 26 nahen Bereich das Abgasführungsrohr 24 zweifach abgekrümmt ist. In diesem Bereich ist ein Wärmeabschirmungselement 30 an dem Abgasführungsrohr 24 vorgesehen. Dieses weist eine an die Kontur des Abgasführungsrohrs 24 angepaßte halbschalenartige Form auf. In seinen beiden Endbereichen 32, 34 weist das Wärmeabschirmungselement 30, das beispielsweise auch aus Blechmaterial geformt sein kann, jeweils mehrere daran integral ausgebildete Distanzabschnitte 36, 38 auf. Mit diesen Distanzabschnitten 36, 38 liegt das Wärmeabschirmungselement derart an dem Abgasführungsrohr 24 an, dass zwischen dem verbleibenden Bereich des Wärmeabschirmungselements 30 und dem Abgasführungsrohr 24 ein Zwischenraum 40 im Bereich von 1 mm gebildet ist. Im Bereich dieser Distanzabschnitte 36, 38, vorzugweise am Endbereich 34, kann das Wärmeabschirmungselement 30 mit dem Abgasführungsrohr 24 durch Verschweißung fest verbunden werden.

Durch das Bereitstellen eines Wärmeabschirmungselements 24 nahe an dem Abgasführungsrohr 24 wird eine gute Abschirmung vor allem gegen Wärmeabstrahlung, aber auch gegen Wärmekonfektion und direkten Kontakt mit dem Abgasführungsrohr 24 erlangt. Es ist selbstverständlich, dass dadurch auch ein Schutz für das Abgasführungsrohr 24 erhalten wird.

Ein derariges Wärmeabschirmungselement kann selbstverständlich auch an anderen Abschnitten des Abgasführungsrohrs vorgesehen sein. Auch ist es möglich, mehrere Wärmeabschirmungselemente in Zuordnung zu einem Abgasführungsrohr vorzusehen.

## Patentansprüche

1. Abgasführungssystem für ein Fahrzeugheizsystem, umfassend ein Abgasführungsrohr (24), das mit einem Abgasauslass eines Heizgerätes (12) verbindbar ist, sowie wenigstens ein Wärmeabschirmungselement (30) für das Abgasführungsrohr (24), welches das Abgasfürungsrohr (24) wenigstens bereichweise und unter Bereitstellung eines Zwischenraums (40) umgibt.

2. Abgasführungssystem nach Anspruch 1,
**dadurch gekennzeichnet, dass** das wenigstens eine Wärmeabschirmungselement (30) eine Mehrzahl von an dem Abgasführungsrohr (24) anliegenden Distanzabschnitten (36, 38) aufweist.

3. Abgasführungssystem nach Anspruch 2,
**dadurch gekennzeichnet, dass** das wenigstens eine Wärmeabschirmungselement (30) an wenigstens einem seiner beiden in Abgasströmungsrichtung vorne und hinten gelegenen Endbereiche (32, 34) wenigstens einen Distanzabschnitt (36, 38) zur Anlage an dem Abgasführungsrohr (24) aufweist.

4. Abgasführungssystem nach einem der vorangehenden AnsprÜche,
**dadurch gekennzeichnet, dass** das wenigstens eine Wärmeabschirmungselement (30) aus Blechmaterial geformt ist.

5. Abgasführungssystem nach Anspruch 4,
**dadurch gekennzeichnet, dass** das wenigstens eine Wärmeabschirmungselement (30) in Anpassung an die Außenform des Abgasführungsrohrs (24) geformt ist.

6. Abgasführungssystem nach Anspruch 2 und einem der Ansprüche 4 oder 5,
**dadurch gekennzeichnet, dass** wenigstens ein Distanzabschnitt (36, 38) an dem wenigstens einen Wärmeabschirmungselement (30) integral angeformt ist.

7. Abgasführungssystem nach einem der vorangehenden Ansprüche,
**dadurch gekennzeichnet,**
**dass** das wenigstens eine Wärmeabschirmungselement (30) mit dem Abgasführungsrohr (24) durch Verschweißung verbunden ist.

8. Abgasführungssystem nach einem der Ansprüche 1 bis 6,
**dadurch gekennzeichnet, dass** das wenigstens eine Wärmeabschirmungselement aus Aluminium gebildet ist und mit dem Abgasführungsrohr durch Verkleben verbunden ist.

9. Fahrzeugheizsystem, umfassend ein Heizgerät (12) und ein mit einem Abgasauslass das Heizgeräts (12) verbundenes Abgasführungssystem (22) nach einem vorangehenden Ansprüche.
